# EUROPÄISCHE PATENTSCHRIFT

(11) **EP 3 100 873 B1**
(45) Veröffentlichungstag und Bekanntmachung des Hinweises auf die Patenterteilung: **31.01.2018**
(21) Anmeldenummer: 16156801.9
(22) Anmeldetag: 23.02.2016
(51) Int. Cl.: B60C 11/13, B60C 11/11

(54) **FAHRZEUGLUFTREIFEN**
PNEUMATIC TYRES FOR A VEHICLE
PNEUMATIQUES DE VÉHICULE

(30) Priorität: 01.06.2015 DE 102015210042
(43) Veröffentlichungstag der Anmeldung: 07.12.2016
(73) Patentinhaber: Continental Reifen Deutschland GmbH, 30165 Hannover (DE)
(72) Erfinder: Heinhaupt, Torsten, 29313 Hambühren (DE); Wanka, Thomas, 30419 Hannover (DE)
(74) Vertreter: Finger, Karsten

(56) Entgegenhaltungen:
- EP-A1- 2 394 823
- EP-A1- 2 676 815
- JP-A- H07 276 920
- JP-A- 2012 101 745
- JP-A- 2014 031 107
- US-A1- 2007 062 626
- US-B2- 6 601 624

## Beschreibung

Die Erfindung betrifft einen Fahrzeugluftreifen mit einem profilierten Laufstreifen mit Profilelementen - wie Profilblockelementen oder Profilrippen - und mit Rillen, wobei die Rillen in radialer Richtung R nach innen hin durch einen Rillengrund und beiderseits des Rillengrundes jeweils durch Rillenwände begrenzt sind, die jeweils Flanken von durch die Rille begrenzten Profilelementen bilden, wobei in wenigstens einer Rille im Rillengrund längs der Erstreckung der Rille verteilt Erhebungen ausgebildet sind, deren Grundfläche im Rillengrund jeweils zwei zueinander senkrecht ausgerichtete Hauptachsen der Längen a und b mit a>b aufweist, wobei die längere Hauptachse in Erstreckungsrichtung der Rille ausgerichtet ist und eine Symmetrieachse der Grundfläche bildet und die kürzere Hauptachse im Abstand c mit c ≥ (a/2) von einem ersten Erstreckungsende der längeren Hauptachse schneidet, wobei die Erhebung längs ihrer Erstreckung entlang der längeren Hauptachse in ihren quer zur längeren Hauptachse gebildeten Schnittebenen jeweils mit einer Schnittkontur ausgebildet ist, deren die Erhebung nach radial außen begrenzende Konturlinie beiderseits der längeren Hauptachse vom Rillengrund ausgehend in Richtung zur längeren Hauptachse hin jeweils mit stetig zunehmender Höhe ausgebildet ist, wobei in einem ersten, zwischen dem erstem Erstreckungsende und dem Abstand c vom ersten Erstreckungsende gebildeten Erstreckungsabschnitt die in den Schnittebenen gebildete Konturlinie beiderseits der längeren Hauptachse jeweils aus einem Konturabschnitt ausgebildet ist, **wobei die Konturabschnitte der Konturlinie** bis zur Position der längeren Hauptachse jeweils mit stetig zunehmender Höhe ausgebildet sind und sich dort in einem Scheitelpunkt S des Konturverlaufes schneiden, wobei im ersten Erstreckungsabschnitt vom ersten Erstreckungsende der längeren Hauptachse ausgehend längs der Erstreckung der längeren Hauptachse bis zum Abstand c die Scheitelpunkte S eine in ihrer Höhe stetig zunehmende
Scheitelpunktlinie s bilden, welche in der Position der längeren Hauptachse im Abstand c vom ersten Erstreckungsende im Punkt P mit maximaler Höhe H₁ ausgebildet ist.

Derartige Fahrzeugluftreifen sind bekannt.

Es ist bekannt, Fahrzeugluftreifen mit einem Laufstreifenprofil mit Rillen und mit durch die Rillen voneinander beabstandeten Profilblockelementen oder Profilrippen auszubilden. Durch die Profilrillen soll das Wasser aus dem Laufstreifenprofil abgeleitet werden. Hierzu werden die Rillen üblicherweise mit im Wesentlichen glatten Oberflächen ausgebildet. Es ist auch bekannt, die Profilblockelemente bzw. Profilrippen an ihren, die Rillenwand bildenden Flanken abschnittsweise mit zur Rillen ausgebildetem Versatz auszubilden, wodurch zusätzliche Griffkanten zum verbesserten Griff auf Schnee erzeugt werden können. Der Versatz erstreckt sich dabei längs der gesamten radialen Erstreckung der Flanke ausgehend von der radial ausgehenden Oberfläche bis zum Rillengrund und ermöglicht somit zusätzlichen Griff. Im radial inneren Erstreckungsbereich der Rille behindern sie jedoch dabei die Wasserströmung.

Es ist auch bekannt, im Rillengrund einer Rille Erhebungen auszubilden, die ein Eindringen von Steinen behindern sollen. Diese behindern jedoch üblicherweise zusätzlich die Wasserströmung zumindest im radial inneren Erstreckungsabschnitt.

Aus der US2001/0032691 A1 ist es bekannt, die Rillenwände und den Rillengrund einer Rille zusätzlich mit feinen in Rillenerstreckungsrichtung ausgerichteten Feinrillen auszubilden, um auf diese Weise den Strömungswiderstand zu reduzieren. Aus diesem Dokument ist auch bekannt, in den Rillenwänden feine Vertiefungen mit einem in der Rillenwand rautenförmigen Querschnitt auszubilden. Zusätzlicher Schneegriff im Bereich des Rillengrundes ist durch die aus diesem Dokument bekannten Maßnahmen nicht möglich.

Aus der US6,601,624B2 ist es bekannt, im Rillengrund in Rillenerstreckungsrichtung lang erstreckt ausgebildete Erhebungen mit linsenförmiger Grundfläche auszubilden. Die Erhebungen sind längs ihrer in Rillenerstreckungsrichtung ausgerichteten Haupterstreckung beiderseits jeweils mit Erhebungsflanken ausgebildet. Die Erhebungsflanken sind längs ihrer gesamten Erstreckung in Haupterstreckungsrichtung hinweg in allen Schnittebenen quer zur Haupterstreckungsrichtung jeweils mit einem Konturlinienabschnitt ausgebildet ist, der sich ausgehend vom Rillengrund zur Mitte hin stetig anhebt, wobei sich die beiden Konturlinienabschnitte in einem Scheitelpunkt treffen. Über die gesamte Erstreckung der Erhebung längs ihrer Haupterstreckungsrichtung hinweg, bilden diese Schnittpunkte der beiden Konturabschnitte eine gemeinsame Scheitellinie. Die Scheitellinie erstreckt sich dabei über die gesamte Erhebung längs deren Haupterstreckungsrichtung hinweg und ist ausgehend von ihrem ersten Erstreckungsende bis zu ihrem zweiten Erstreckungsende mit einem stetigem Höhenverlauf ausgebildet. Durch diese über einen großen Erstreckungsabschnitt der Rille ausgebildeten sehr lange erstreckt ausgebildeten Erhebungen mit einer Erstreckungslänge von mehreren Zentimetern soll es ermöglicht werden, große breite Rillen mit reduzierter Geräuschbildung umzusetzen. Die Form dieser Erhebungen ist möglicherweise dazu geeignet sein, Geräusche zu reduzieren und auch Strömungsgünstig sein. Zusätzliche Griffkanten in Rillenrichtung werden hierdurch nicht ermöglicht. Eine Schneegriffeignung des Reifens wird hierdurch nicht begünstigt.

**Ein Fahrzeugluftreifen gemäß den Merkmalen des Oberbegriffs von Anspruch 1 ist aus der** JP2012101745A **oder aus der JPH07276920A bekannt.**

Der Erfindung liegt die Aufgabe zugrunde, bei derartigen Fahrzeugluftreifen mit einfachen Mitteln zusätzliche Traktionselemente in Rillen bereitzustellen, die eine Verbesserung des Schneegriffs ermöglichen ohne die Wasserströmung stark zu beeinträchtigen.

Die Aufgabe wird erfindungsgemäß durch die Ausbildung eines Fahrzeugluftreifens mit einem profilierten Laufstreifen mit Profilelementen - wie Profilblockelementen oder Profilrippen - und mit Rillen, wobei die Rillen in radialer Richtung R nach innen hin durch einen Rillengrund und beiderseits des Rillengrundes jeweils durch Rillenwände begrenzt sind, die jeweils Flanken von durch die Rille begrenzten Profilelementen bilden, wobei in wenigstens einer Rille im Rillengrund längs der Erstreckung der Rille verteilt Erhebungen ausgebildet sind, deren Grundfläche im Rillengrund jeweils zwei zueinander senkrecht ausgerichtete Hauptachsen der Längen a und b mit a>b aufweist, wobei die längere Hauptachse in Erstreckungsrichtung der Rille ausgerichtet ist und eine Symmetrieachse der Grundfläche bildet und die kürzere Hauptachse im Abstand c mit c ≥ (a/2) von einem ersten Erstreckungsende der längeren Hauptachse schneidet, wobei die Erhebung längs ihrer Erstreckung entlang der längeren Hauptachse in ihren quer zur längeren Hauptachse gebildeten Schnittebenen jeweils mit einer Schnittkontur ausgebildet ist, deren die Erhebung nach radial außen begrenzende Konturlinie beiderseits der längeren Hauptachse vom Rillengrund ausgehend in Richtung zur längeren Hauptachse hin jeweils mit stetig zunehmender Höhe ausgebildet ist, wobei in einem ersten, zwischen dem erstem Erstreckungsende und dem Abstand c vom ersten Erstreckungsende gebildeten Erstreckungsabschnitt die in den Schnittebenen gebildete Konturlinie beiderseits der längeren Hauptachse jeweils aus einem Konturabschnitt ausgebildet ist, **wobei die Konturabschnitte der Konturlinie** bis zur Position der längeren Hauptachse jeweils mit stetig zunehmender Höhe ausgebildet sind und sich dort in einem Scheitelpunkt S des Konturverlaufes schneiden, wobei im ersten Erstreckungsabschnitt vom ersten Erstreckungsende der längeren Hauptachse ausgehend längs der Erstreckung der längeren Hauptachse bis zum Abstand c die Scheitelpunkte S eine in ihrer Höhe stetig zunehmende Scheitelpunktlinie s bilden, welche in der Position der längeren Hauptachse im Abstand c vom ersten Erstreckungsende im Punkt P mit maximaler Höhe H₁ ausgebildet ist, gemäß den Merkmalen von Anspruch 1 gelöst, bei dem in dem zwischen kürzerer Hauptachse und zweitem Erstreckungsende der längeren Hauptachse gebildeten Erstreckungsabschnitt jeweils die Konturlinie in den Schnittebenen aus drei Konturabschnitten ausgebildet ist, von denen die beiden äußeren Konturabschnitte jeweils in Richtung bis zur längeren Hauptachse mit bis in eine Höhe h mit h <Hi stetig zunehmender Höhe und der mittlere Konturabschnitt eine in der Höhe h ausgebildete im Wesentlichen geradlinige Verbindung der beiden äußeren Konturabschnitte bildet, wobei die mittleren Konturabschnitte im Erstreckungsbereich zwischen zweitem Erstreckungsende der längeren Hauptachse und der kürzeren Hauptachse eine im Wesentlichen ebene Fläche bilden, die die Erhebung in diesem Abschnitt nach radial außen begrenzen.

Die Ausbildung ermöglicht es, im Bereich des Rillengrundes der Rille zusätzliche Griffkanten aufgrund der Höhendifferenz zwischen dem Punkt P und der ebenen Fläche mit Höhe h bereitzustellen, wodurch der Schneegriff auch im späten Einsatzstadium des Reifens nach erheblichem Abrieb noch wirksam verbessert werden kann. Durch die Ausbildung der Form und Ausrichtung der Erhebung mit ihrer längeren, die Symmetrieachse bildenden und in Erstreckungsrichtung der Rille ausgerichteten Achse und mit den im ersten Erstreckungsabschnitt des Haupterstreckungsrichtung gebildeten Schnittkonturenverlauf mit Schnittpunkten S, welche die stetig bis zum Punkt P ansteigende Scheitellinie bildet, und mit dem dreiteiligen Konturverlauf in den Schnittebenen des zweiten Erstreckungsabschnitts mit der in der Höhe h gebildeten Ebene ermöglicht eine strömungsoptimierte Ausbildung der Erhebungen und dies bei zusätzlicher Schaffung von Griffkanten. Somit kann mit einfachen Mitteln ein besserer Griff auf Schnee ermöglicht werden, ohne den Wasserabfluss unerwünscht zu beeinträchtigen.

Besonders vorteilhaft ist die Ausbildung eines Fahrzeugreifens gemäß den Merkmalen von Anspruch 2, wobei die Grundfläche drachenförmig ausgebildet ist. Die Drachenform ermöglicht in einfacher Weise eine besonders strömungsgünstige symmetrische Ausbildung. Die Drachenform ermöglicht dabei eine technisch einfach umsetzbare Ausbildung, die fast der in der Natur als besonders strömungsgünstig, aber technisch aufwändig umzusetzenden Regentropfenform entspricht.

Besonders vorteilhaft ist die Ausbildung eines Fahrzeugreifens gemäß den Merkmalen von Anspruch 3, wobei die Scheitellinie s geradlinig ausgebildet ist. Dies begünstigt in einfacher Weise beiderseits der Scheitellinie s eine weitgehend störungsfreie, laminare Strömung der durch Erhebung aufgeteilten Strömung bei großer wirksamer Kantenlänge zur Erzeugung hoher Schneetraktion in Richtung der kürzeren Hauptachse und somit quer zur Rille.

Besonders vorteilhaft ist die Ausbildung eines Fahrzeugreifens gemäß den Merkmalen von Anspruch 4, wobei die beiden im ersten Erstreckungsabschnitt in den Schnittebenen gebildeten Konturabschnitte jeweils geradlinig ausgebildet sind. Dies begünstigt in einfacher Weise beiderseits der Scheitellinie s eine weitgehend störungsfreie, laminare Strömung der durch Erhebung aufgeteilten Strömung und dabei ein weiter verbessertes Eindringen der Erhebung in den Schnee und somit weiter verbesserten Schneegriff.

Besonders vorteilhaft ist die Ausbildung eines Fahrzeugreifens gemäß den Merkmalen von Anspruch 5, wobei die im zweiten Erstreckungsabschnitt in den Schnittebenen gebildeten beiden äußeren Konturabschnitte jeweils geradlinig ausgebildet sind. Dies ermöglicht in einfacher Weise eine besonders strömungsoptimierte Ausbildung.

Besonders vorteilhaft ist die Ausbildung eines Fahrzeugreifens gemäß den Merkmalen von Anspruch 6, wobei die Höhe h der ebenen Fläche längs ihrer Erstreckung von der entlang der längeren Hauptachse ausgehend von der Position der kürzeren Hauptachse zum zweiten Erstreckungsende der längeren Hauptachse monoton fallend ausgebildet ist. Hierdurch kann in einfacher Weise die Erhebung mit verbesserter Herstellbarkeit des Übergangsbereichs zwischen Erhebung und Rillengrund umgesetzt werden.

Besonders vorteilhaft ist die Ausbildung eines Fahrzeugreifens gemäß den Merkmalen von Anspruch 7, wobei in der Erhebung in der Position der kürzeren Hauptachse eine ebene Stirnfläche ausgebildet ist, die den Punkt P mit der ebenen Fläche verbindet. Hierdurch kann in einfacher Weise eine verbesserte Schneetraktion in Erstreckungsrichtung der längeren Hauptachse bei guter Herstellbarkeit der Erhebung umgesetzt werden.

Besonders vorteilhaft ist die Ausbildung eines Fahrzeugreifens gemäß den Merkmalen von Anspruch 8, wobei a mit 5mm≤a≤ 15mm ausgebildet ist. Durch diese Ausbildung ist a klein genug, um den Wasserfluss frei von Störungen zu ermöglichen, und ausreichend groß, um dennoch trotz Erhebung in einfacher Weise ein laminares Umströmen der Erhebung sicher umzusetzen.

Besonders vorteilhaft ist die Ausbildung eines Fahrzeugreifens gemäß den Merkmalen von Anspruch 9, wobei b mit 0,5mm≤b≤ 3mm ausgebildet ist. Hierdurch kann in einfacher Weise eine besonders strömungsgünstige Ausbildung bei Bereitstellung ausreichend wirksamer Griffkanten umgesetzt werden.

Besonders vorteilhaft ist die Ausbildung eines Fahrzeugreifens gemäß den Merkmalen von Anspruch 10, wobei b mit b≤ 0,25a ausgebildet ist. Dies ermöglicht in einfacher Weise eine zur Erzielung einer laminaren Umströmung der Erhebung bei ausreichend wirksamen Griffkanten optimierte Ausbildung.

Besonders vorteilhaft ist die Ausbildung eines Fahrzeugreifens gemäß den Merkmalen von Anspruch 11, wobei c mit (0,6 a) ≤ c ≤ (0,8 a) ausgebildet ist. Hierdurch kann in einfacher Weise eine besonders strömungsgünstige Ausbildung umgesetzt werden.

Besonders vorteilhaft zur Optimierung der Schneetraktion ist die Ausbildung eines Fahrzeugreifens gemäß den Merkmalen von Anspruch 12, wobei h mit h≤ 0,25H ausgebildet ist.

Besonders vorteilhaft ist die Ausbildung eines Fahrzeugreifens gemäß den Merkmalen von Anspruch 13, wobei H mit 1mm≤H≤ 2mm ausgebildet ist. Dies ermöglicht in einfacher Weise die Umsetzung einer Erhebung mit Bereitstellung einer ausreichend großen Stirnfläche und somit zur Verbesserung der Schneetraktion.

Die Erfindung wird im Folgenden an Hand der in den Figuren 1 bis 9 dargestellten Ausführungsbeispiele näher erläutert. Hierin zeigen
- Fig.1: einen Abschnitt eines Laufstreifenprofils für Personenkraftwagen in Draufsicht,
- Fig.2: eine Detaildarstellung des Details II von Fig.1 in deutlich vergrößerter Darstellung zur Erläuterung der Ausbildung der Erhebung in Draufsicht,
- Fig.3: die Darstellung des Rillengrundes und der Erhebung von Fig.2 in Schnittdarstellung gemäß Schnitt III-III von Fig.2,
- Fig.4: die Darstellung des Rillengrundes und der Erhebung in Schnittdarstellung gemäß Schnitt IV-IV von Fig.2,
- Fig.5: die Darstellung des Rillengrundes und der Erhebung in Schnittdarstellung gemäß Schnitt V-V von Fig.2,
- Fig.6: die Darstellung der Erhebung und des Rillengrundes in Schnittdarstellung gemäß Schnitt VI-VI von Fig.2,
- Fig.7: die Darstellung der Erhebung und des Rillengrundes in Schnittdarstellung gemäß Schnitt VII-VII von Fig.2,
- Fig.8: die Darstellung der Erhebung und des Rillengrundes in Schnittdarstellung gemäß Schnitt VIII-VIII von Fig.2 und
- Fig.9: eine Darstellung des Profils von Fig.1 in Schnittdarstellung gemäß Schnitt IX-IX von Fig.1.

Die Schnitte III-III, IV-IV, V-V, VI-VI, VII-VII, VIII-VIII sind dabei jeweils senkrecht zur Erstreckungsrichtung der Rille gewählt.

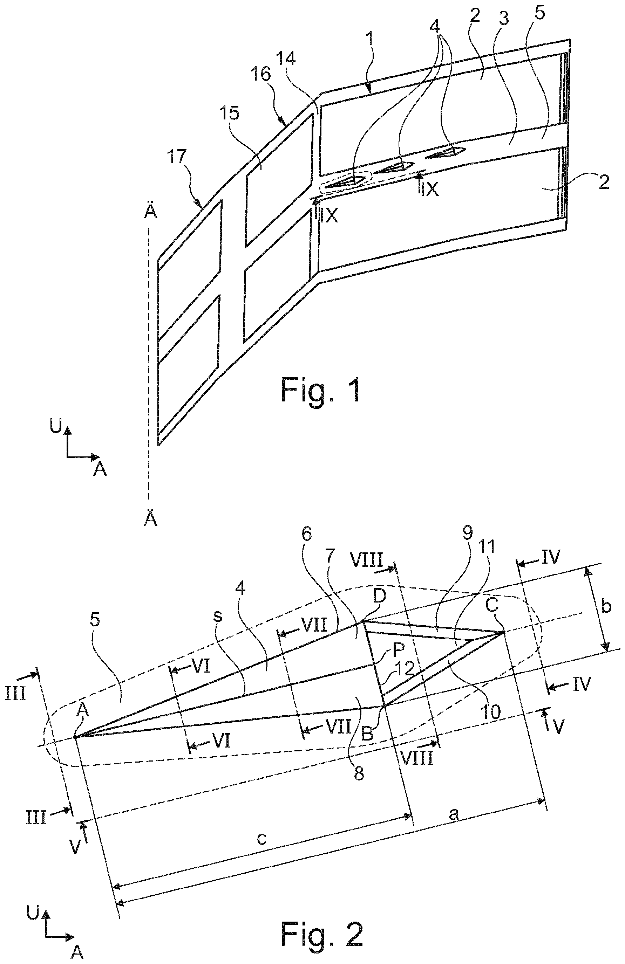

Die Figuren 1,2 und 9 zeigen ein Laufstreifenprofil eines Fahrzeugluftreifens für Personenkraftwagen (PKW), bei welchem in bekannter Weise mehrere in axialer Richtung A des Fahrzeugluftreifens nebeneinander angeordnete und jeweils durch Umfangsrillen voneinander beabstandete Profilblockreihen 17, 16, 1 ausgebildet sind. Die Umfangsrillen erstrecken sich in bekannter Weise über den gesamten Umfang des Fahrzeugluftreifens und sind in Umfangsrichtung U des Fahrzeugluftreifens ausgerichtet. Die Profilblockreihen 17, 16 und 1 erstrecken sich in bekannter Weise über den gesamten Umfang des Fahrzeugluftreifens und sind jeweils aus in Umfangsrichtung U des Fahrzeugluftreifens hintereinander angeordneten und durch Querrillen voneinander beabstandeten Profilblockelementen ausgebildet. Die Profilblockreihe 16 ist dabei aus den in Umfangsrichtung U hintereinander angeordneten Profilblockelementen 15 ausgebildet. Die Profilblockreihe 1 ist aus den in Umfangsrichtung U hintereinander angeordneten Profilblockelementen 2 ausgebildet. Die Profilblockreihen 16 und 1 sind durch die - in Figur 1 dargestellte - Umfangsrille 14 in axialer Richtung A voneinander beabstandet.

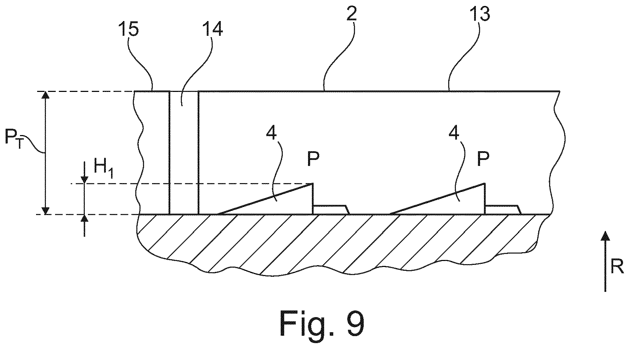

Die Profilblockelemente 2 der Profilblockreihe 1 sind durch die - in den Figuren 1 und 9 dargestellten - Querrillen 5 voneinander beabstandet.

Die Profilblockelemente 2 der Profilblockreihe 1 sowie die Profilblockelemente 15 der Profilblockreihe 16 und die Profilblockelemente der Profilblockreihe 17 sind jeweils in radialer Richtung R des Reifens nach außen hin durch eine die Bodenkontaktoberfläche bildende, radial äußere Oberfläche 13 begrenzt.

Die Rillen sind in radialer Richtung R nach innen hin jeweils durch einen Rillengrund und beiderseits des Rillengrundes jeweils durch eine Rillenwand, die sich ausgehend vom Rillengrund in radialer Richtung R nach außen bis zur radialäußeren Oberfläche 13 erstreckt, begrenzt.

Dabei ist die Querrille 3 in radialer Richtung R nach innen hin durch einen Rillengrund 5 und beiderseits des Rillengrundes 5 jeweils durch eine Rillenwand begrenzt. Die Profilblockelemente 2 sind in Umfangsrichtung U zu beiden Seiten hin jeweils durch eine Profilblockelementflanke begrenzt, wobei jeweils die zu einer Querrille 3 hinweisende Profilblockelementflanke eines an die Querrille 3 angrenzenden Profilblockelementes 2 diejenige zu dem jeweiligen Profilblockelement 2 hinweisende Rillenwand der Querrille 3 bildet. Die Querrillen 3 sind mit einer in radialer Richtung R nach innen hin gemessenen Tiefe ausgebildet, welche der Profiltiefe P_{T} entspricht und die den Abstand der radial äußeren Oberfläche 13 der an die Querrille 3 grenzenden Profilblockelemente 2 zum Rillengrund 5 darstellt.

Wie in den Figuren 1, 2 und 9 dargestellt ist, sind längs der Erstreckung der Querrille 3 hintereinander angeordnet mehrere Erhebungen 4 im Rillengrund 5 der Rille 3 ausgebildet, welche sich aus dem Rillengrund 5 in radialer Richtung R nach außen erheben.

Wie in Fig.2 am Beispiel einer Erhebung 4 dargestellt ist, ist die Erhebung 4 jeweils im Rillengrund 5 mit einer viereckigen, drachenförmigen Grundfläche 6 ausgebildet, deren Drachenform (Deltoid) mit dem Dracheneckpunkten A, B, C und D sowie mit den Drachendiagonalen AC und BD ausgebildet ist. Die Drachendiagonale AC bildet dabei die längere Hauptachse des Drachens und ist mit einer Erstreckungslänge a ausgebildet und in Haupterstreckungsrichtung der Querrille 3 im Rillengrund 5 ausgerichtet. Die Diagonale BD bildet die kleinere Haupterstreckungsachse des geraden Drachens und ist mit einer Erstreckungslänge b ausgebildet und senkrecht zur längeren Haupterstreckungsachse AC ausgerichtet. Die Diagonale AC bildet die Symmetrieachse des Drachens, welche die Diagonale BD mittig teilt. Die Erstreckungslänge b ist mit 0,5mm ≤ b ≤ 3mm gewählt. Die Erstreckungslänge a ist mit 5mm ≤ a ≤ 15mm gewählt. Für die beiden Erstreckungslängen b und a gilt b ≤ (0,25a).

Die Punkte A und C sind dabei so positioniert, dass der Punkt A längs der Erstreckungsrichtung der Querrille 3 von der Reifenschulter gesehen in Richtung Äquatorebene Ä-Ä des Reifens zwischen dem Punkt C und der Äquatorebene des Reifens angeordnet ist.

Die Diagonale BD schneidet die Diagonale AC in einer Position, welche in einem Abstand c vom Punkt A angeordnet ist. Dabei sind c und a mit (0,6 a) ≤ c ≤ (0,8 a) gewählt ausgebildet. Beispielsweise ist c = (0,7 a) gewählt.

Beispielsweise ist a=10mm, b=2mm und c=7mm gewählt.

Die Erhebung 4 ist längs der Erstreckung der Diagonalen AC in einem ersten Erstreckungsabschnitt, welcher sich ausgehend von Punkt A über die Erstreckungslänge c - d.h. bis zur Diagonalen BD - erstreckt, mit zwei Flanken 7 und 8 ausgebildet, die jeweils eine ebene Fläche bilden und die Erhebung 4 nach radial außen begrenzen. Die Flanken 7 und 8 schneiden sich in einer Schnittlinie s. Die Flanke 7 schneidet den Rillengrund 5 in der Drachenkonturlinie AD. Die Flanke 8 schneidet den Rillengrund 5 in der Drachenkonturlinie AB.

Wie in den Figuren 2, 5, 6 und 7 zu erkennen ist, ist in diesem ersten Erstreckungsabschnitt die Erhebung 4 in den senkrecht zu der die längere Hauptachse bildenden Drachendiagonalen AC gebildeten Schnittebenen die Schnittkontur der Erhebung 4 jeweils aus zwei geradlinigen Konturlinien K₁ und K₂ ausgebildet. Die Konturlinie K₁ bildet dabei die Schnittkontur der Flanke 7 der Erhebung 4 und erstreckt sich ausgehend von der Drachenlinie AD im Rillengrund 5 in Richtung zur Diagonalen AC hin gradlinig und in ihrer Höhe linear ansteigend bis in eine in radialer Richtung R vom Rillengrund 5 aus gemessene Höhe H. Die Konturlinie K₂ bildet die Schnittkontur der Flanke 8 der Erhebung 4 und erstreckt sich ausgehend von der Drachenlinie AB im Rillengrund in Richtung Drachendiagonale AC hin gradlinig und in ihrer Höhe linear ansteigend bis in die Höhe H, wo sie in einem Schnittpunkt S die Konturlinie K₁ schneidet.

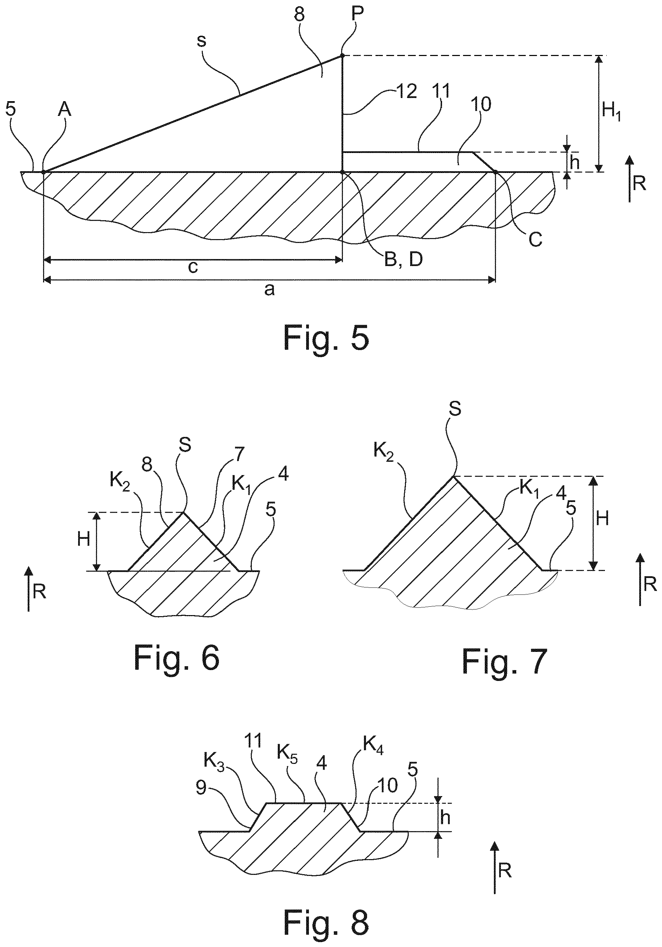

Wie in den Figuren 2, 3 und 5 zu erkennen ist, bilden die Schnittpunkte S dabei längs des gesamten ersten Erstreckungsabschnittes der Erhebung 4 zwischen Punkt A und der Diagonalen BD eine Scheitelpunktlinie s, welche ausgehend vom Punkt A bis zur Position der Diagonalen BD im Abstand c von Punkt A linear ansteigt. Dort erreicht sie ihre maximale Höhe H₁ im Punkt P, wie in Figur 5 dargestellt ist. Der Punkt P bildet auch die Position der maximalen Höhe der Erhebung 4.

Die Erhebung 4 ist längs der Erstreckung der längeren Diagonalen AC in einem zweiten Erstreckungsabschnitt, welcher sich zwischen dem Punkt C und der Diagonalen BD - erstreckt, mit den drei Flächen 9, 10 und 11 in radialer Richtung R nach außen hin begrenzt. Wie in den Figuren 2, 4 und 5 dargestellt ist, ist in diesem Erstreckungsabschnitt die Erhebung 4 in einer radialen Position in einer in radialer Richtung R vom Rillengrund 5 nach außen hin gemessenen Höhe h mit h < H₁ von der ebenen Fläche 11 begrenzt ausgebildet, welche sich planparallel zum Rillengrund 5 erstreckt. Die Flächen 9 und 10 bilden im zweiten Erstreckungsabschnitt jeweils eine Flanke der Erhebung 4. Die Flanke 9 schneidet den Rillengrund 5 in der Drachenkonturlinie DC. Die Flanke 10 schneidet den Rillengrund 5 in der Drachenkonturlinie CB.

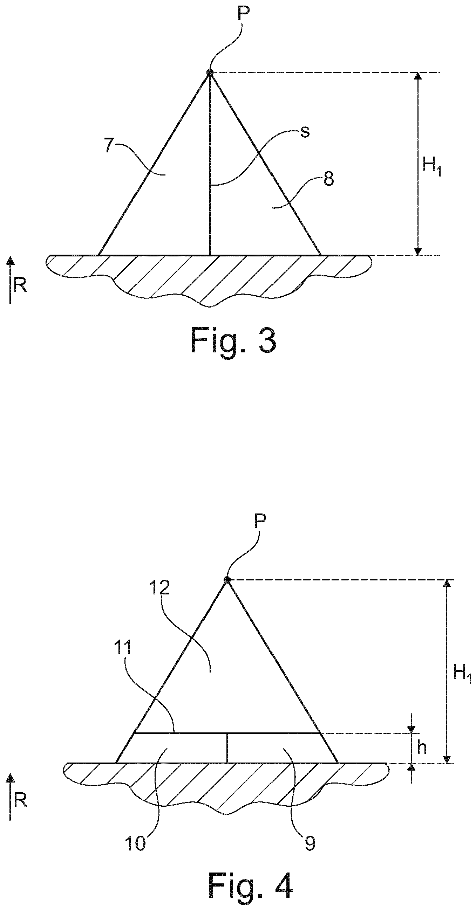

Wie in den Figuren 4 und 8 zu erkennen ist, bildet ist in diesem zweiten Erstreckungsabschnitt die Erhebung 4 in den senkrecht zu der die längere Hauptachse bildenden Drachendiagonalen AC gebildeten Schnittebenen die Schnittkontur der Erhebung 4 jeweils aus zwei geradlinigen Konturlinien K₁ und K₂ ausgebildet.

Wie in den Figuren 4 und 8 dargestellt ist, bildet die Flanke 9 in den senkrecht zu der die längere Hauptachse bildenden Drachendiagonalen AC gebildeten Schnittebenen dabei eine Konturlinie K₃, welche ausgehend von der Drachenlinie DC im Rillengrund 5 in Richtung zur Drachendiagonalen AC hin gradlinig und mit linear zunehmender Höhe bis in eine Position, in der sie die Höhe h erreicht hat, ansteigend ausgebildet ist. Ebenso bildet die Flanke 10 in den senkrecht zu der die längere Hauptachse bildenden Drachendiagonalen AC gebildeten Schnittebenen jeweils eine Konturlinien K4 , welche ausgehend von der Drachenlinie BC im Rillengrund 5 in Richtung zur Drachendiagonalen AC hin gradlinig und mit linear zunehmender Höhe bis zur Erreichung der Höhe h ansteigend ausgebildet ist. In der Position in der die Konturlinie K₃ die Höhe h einnimmt, endet die Konturlinie K₃ und an die Konturlinie K₃ schließt sich die durch die Fläche 11 gebildete Konturlinie K₅ an, welche sich gradlinig mit konstanter Höhe h bis zum Schnitt mit der Konturlinie K₄ der Fläche 10 erstreckt.

Die Flächen 9 und 10 sind dabei in ihrem Verlauf ihrer Schnittkonturen K₃ und K₄ in den senkrecht zu der die längere Hauptachse bildenden Drachendiagonalen AC gebildeten Schnittebenen mit derartiger Steigung ausgebildet, dass in der Schnittebene in der Position der Drachenachse BD die Neigung der Schnittkontur K₃ der Neigung der Konturlinien K₁ in dieser Position der Drachenachse BD und die Schnittkontur K₂ der Neigung der Konturlinien K₁ in dieser Position der Drachenachse BD entspricht.

In der Ebene, die die Punkte P, B und D beinhaltet, ist am ersten Erstreckungsabschnitt der Erhebung 4 eine ebene Stirnfläche 12 ausgebildet, welche sich ausgehend vom Punkt P nach radial innen bis zu der Höhe h oberhalb des Rillengrundes 5 erstreckt und dort die bis Ebene 11 schneidet.

Die Höhe H₁ ist mit 1mm ≤ H₁ ≤ 2mm ausgebildet. Beispielsweise ist die Höhe H₁ mit H₁ = 2mm ausgebildet.

Die Höhe h ist mit 0,1mm ≤ h ≤ 0,9mm ausgebildet. Beispielsweise ist die Höhe h mit h = 0,5mm ausgebildet.

Dabei ist h ≤ (0,25 H₁) ausgebildet.

In einem Ausführungsbeispiel ist beispielsweise a=10mm, b=2mm, H₁=2mm und h=0,5mm gewählt.

In den in den Figuren 1 und 9 sind Erhebungen 4 im Rillengrund 5 nur in Querrillen 3 dargestellt. In anderer - nicht dargestellter - Ausführung sind zusätzlich derartige Erhebungen in Umfangsrillen. Dies kann beispielweise sinnvoll sein, um im Rillengrund zusätzliche Traktions- oder Bremswirkung auf Schnee zu ermöglichen.

In Fig.1 ist ein weiteres Ausführungsbeispiel dargestellt, bei welchem die Profilblockreihe 1 eine Schulterprofilblockreihe bildet.

In einem nicht dargestellten, weiteren Ausführungsbeispiel ist die Höhe h der ebenen Fläche 11 längs ihrer Erstreckung der längeren Hauptachse AC ausgehend von der Position der kürzeren Hauptachse BD zum zweiten Erstreckungsende C hin monoton abnehmend ausgebildet.

### Bezugszeichenliste

### (Teil der Beschreibung)

- 1: Profilblockreihe
- 2: Profilblockelement
- 3: Querrille
- 4: Erhebung
- 5: Rillengrund
- 6: Grundfläche
- 7: Flanke
- 8: Flanke
- 9: Flanke
- 10: Flanke
- 11: Ebene Fläche
- 12: Stirnfläche
- 13: Radial äußere Oberfläche
- 14: Umfangsrille
- 15: Profilblockelement
- 16: Profilblockreihe
- 17: Profilblockreihe

## Patentansprüche

1. Fahrzeugluftreifen mit einem profilierten Laufstreifen mit Profilelementen (2) - wie Profilblockelementen oder Profilrippen - und mit Rillen (3), wobei die Rillen (3) in radialer Richtung R nach innen hin durch einen Rillengrund (5) und beiderseits des Rillengrundes (5) jeweils durch Rillenwände begrenzt sind, die jeweils Flanken von durch die Rille begrenzten Profilelementen (2) bilden, wobei in wenigstens einer Rille (3) im Rillengrund (5) längs der Erstreckung der Rille (3) verteilt Erhebungen (4) ausgebildet sind, deren Grundfläche (6) im Rillengrund (5) jeweils zwei zueinander senkrecht ausgerichtete Hauptachsen (AC,BD) der Längen a und b mit a>b aufweist, wobei die längere Hauptachse (AC) in Erstreckungsrichtung der Rille (3) ausgerichtet ist und eine Symmetrieachse der Grundfläche (6) bildet und die kürzere Hauptachse (BD) im Abstand c mit c ≥ (a/2) von einem ersten Erstreckungsende (A) der längeren Hauptachse (AC) schneidet, wobei die Erhebung (4) längs ihrer Erstreckung entlang der längeren Hauptachse (AC) in ihren quer zur längeren Hauptachse (AC) gebildeten Schnittebenen jeweils mit einer Schnittkontur ausgebildet ist, deren die Erhebung (4) nach radial außen begrenzende Konturlinie beiderseits der längeren Hauptachse (AC) vom Rillengrund (5) ausgehend in Richtung zur längeren Hauptachse (AC) hin jeweils mit stetig zunehmender Höhe ausgebildet ist, wobei in einem ersten, zwischen dem erstem Erstreckungsende (A) und dem Abstand c vom ersten Erstreckungsende (A) gebildeten Erstreckungsabschnitt die in den Schnittebenen gebildete Konturlinie beiderseits der längeren Hauptachse (AC) jeweils aus einem Konturabschnitt (K₁,K₂) ausgebildet ist, **wobei die Konturabschnitte (K₁,K₂) der Konturlinie** bis zur Position der längeren Hauptachse (AC) jeweils mit stetig zunehmender Höhe ausgebildet sind und sich dort in einem Scheitelpunkt S des Konturverlaufes schneiden, wobei im ersten Erstreckungsabschnitt vom ersten Erstreckungsende (A) der längeren Hauptachse (AC) ausgehend längs der Erstreckung der längeren Hauptachse (AC) bis zum Abstand c die Scheitelpunkte S eine in ihrer Höhe stetig zunehmende Scheitelpunktlinie s bilden, welche in ihrem Punkt P in der Position der längeren Hauptachse (AC) im Abstand c vom ersten Erstreckungsende (A) mit maximaler Höhe Hi ausgebildet ist,
**dadurch gekennzeichnet,**
**dass** in dem zwischen kürzerer Hauptachse (BD) und zweitem Erstreckungsende (C) der längeren Hauptachse (AC) gebildeten Erstreckungsabschnitt jeweils die Konturlinie in den Schnittebenen aus drei Konturabschnitten (K₃,K₄, K₅) ausgebildet ist, von denen die beiden äußeren Konturabschnitte (K₃,K₄) jeweils in Richtung zur längeren Hauptachse (AC) bis in eine Höhe h mit h <H₁ mit stetig zunehmender Höhe ausgebildet sind und der mittlere Konturabschnitt (K₅) eine in der Höhe h ausgebildete im Wesentlichen geradlinige Verbindung der beiden äußeren Konturabschnitte (K₃,K₄) bildet, wobei die mittleren Konturabschnitte (K₅) im Erstreckungsbereich zwischen zweitem Erstreckungsende (C) der längeren Hauptachse (AC) und der kürzeren Hauptachse (BD) eine im Wesentlichen ebene Fläche (11) bilden, die die Erhebung (4) in diesem Abschnitt nach radial außen begrenzen.

2. Fahrzeugluftreifen gemäß den Merkmalen von Anspruch 1,
wobei die Grundfläche (6) drachenförmig ausgebildet ist.

3. Fahrzeugluftreifen gemäß den Merkmalen von Anspruch 1 oder 2,
wobei die Scheitellinie s geradlinig ausgebildet ist.

4. Fahrzeugluftreifen gemäß den Merkmalen von einem der vorangegangenen Ansprüche,
wobei die beiden im ersten Erstreckungsabschnitt in den Schnittebenen gebildeten Konturabschnitte (K₁,K₂) jeweils geradlinig ausgebildet sind.

5. Fahrzeugluftreifen gemäß den Merkmalen von einem der vorangegangenen Ansprüche,
wobei die im zweiten Erstreckungsabschnitt in den Schnittebenen gebildeten beiden äußeren Konturabschnitte (K₃,K₄) jeweils geradlinig ausgebildet sind.

6. Fahrzeugluftreifen gemäß den Merkmalen von einem der vorangegangenen Ansprüche,
wobei die Höhe h der ebenen Fläche (11) längs ihrer Erstreckung von der entlang der längeren Hauptachse (AC) ausgehend von der Position der kürzeren Hauptachse (BD) zum zweiten Erstreckungsende (C) der längeren Hauptachse (AC) monoton fallend ausgebildet ist.

7. Fahrzeugluftreifen gemäß den Merkmalen von einem der vorangegangenen Ansprüche,
wobei in der Erhebung (4) in der Position der kürzeren Hauptachse (BD) eine ebene Stirnfläche (12) ausgebildet ist, die den Punkt P mit der ebenen Fläche (11) verbindet.

8. Fahrzeugluftreifen gemäß den Merkmalen von einem der vorangegangenen Ansprüche,
wobei a mit 5mm≤a≤ 15mm ausgebildet ist.

9. Fahrzeugluftreifen gemäß den Merkmalen von einem der vorangegangenen Ansprüche,
wobei b mit 0,5mm≤b≤ 3mm ausgebildet ist.

10. Fahrzeugluftreifen gemäß den Merkmalen von einem der vorangegangenen Ansprüche,
wobei b mit b≤ 0,25a ausgebildet ist.

11. Fahrzeugluftreifen gemäß den Merkmalen von einem der vorangegangenen Ansprüche,
wobei c mit (0,6 a) ≤ c ≤ (0,8 a) ausgebildet ist.

12. Fahrzeugluftreifen gemäß den Merkmalen von einem der vorangegangenen Ansprüche,
wobei h mit h≤ 0,25H ausgebildet ist.

13. Fahrzeugluftreifen gemäß den Merkmalen von einem der vorangegangenen Ansprüche,
wobei H mit 1mm≤H≤ 2mm ausgebildet ist.

## Claims

1. Pneumatic vehicle tyre with a profiled tread comprising profile elements (2) - such as profile block elements or profiled ribs - and comprising grooves (3), wherein the grooves (3) are bounded inwardly in the radial direction R by a groove base (5) and on both sides of the groove base (5) respectively by groove walls, which respectively form flanks of profile elements (2) bounded by the groove, wherein, in at least one groove (3), elevations (4) are formed in the groove base (5), distributed along the extent of the groove (3), the base area (6) of which elevations has in the groove base (5) respectively two principal axes (AC, BD) that are aligned perpendicularly in relation to one another and are of the lengths a and b, with a > b, wherein the longer principal axis (AC) is aligned in the direction of extent of the groove (3) and forms an axis of symmetry of the base area (6) and intersects the shorter principal axis (BD) at the distance c from a first end (A) of the extent of the longer principal axis (AC), with c ≥ (a/2), wherein, along its extent along the longer principal axis (AC), the elevation (4) is formed in its sectional planes that are formed transversely in relation to the longer principal axis (AC) respectively with a section contour of which the contour line that bounds the elevation (4) radially outwards is formed respectively with a steadily increasing height on both sides of the longer principal axis (AC) from the groove base (5) in the direction of the longer principal axis (AC), wherein, in a first portion of extent, formed between the first end (A) of the extent and the distance c from the first end (A) of the extent, the contour line formed in the sectional planes is formed respectively by a contour portion (K₁, K₂) on both sides of the longer principal axis (AC), wherein the contour portions (K₁, K₂) of the contour line are formed up to the position of the longer principal axis (AC) respectively with a steadily increasing height and intersect there at an apex point S of the curve profile, wherein, in the first portion of extent, from the first end (A) of the extent of the longer principal axis (AC) along the extent of the longer principal axis (AC) up to the distance c, the apex points S form an apex point line s that steadily increases in its height and is formed with the maximum height H₁ at its point P in the position of the longer principal axis (AC) at the distance c from the first end (A) of the extent,
**characterized**
**in that**, in the portion of extent between the shorter principal axis (BD) and the second end (C) of the extent of the longer principal axis (AC), the contour line is respectively formed in the sectional planes by three contour portions (K₃, K₄, K₅), of which the two outer contour portions (K₃, K4) are formed with a steadily increasing height respectively in the direction of the longer principal axis (AC) up to a height h, with h < H₁, and the middle contour portion (K₅) forms a substantially straight connection between the two outer contour portions (K₃, K₄) that is formed at the height h, wherein the middle contour portions (K₅) form in the region of extent between the second end (C) of the extent of the longer principal axis (AC) and the shorter principal axis (BD) a substantially planar surface (11), which bound the elevation (4) radially outwards in this portion.

2. Pneumatic vehicle tyre according to the features of Claim 1,
wherein the base area (6) is formed in a kite-shaped manner.

3. Pneumatic vehicle tyre according to the features of Claim 1 or 2,
wherein the apex line s is formed as a straight line.

4. Pneumatic vehicle tyre according to the features of one of the preceding claims,
wherein the two contour portions (K₁, K₂) formed in the sectional planes in the first portion of extent are respectively formed as a straight line.

5. Pneumatic vehicle tyre according to the features of one of the preceding claims,
wherein the two outer contour portions (K₃, K₄) formed in the sectional planes in the second portion of extent are respectively formed as a straight line.

6. Pneumatic vehicle tyre according to the features of one of the preceding claims,
wherein, along its extent from the along the longer principal axis (AC), the height h of the planar surface (11) is formed as monotonically decreasing from the position of the shorter principal axis (BD) to the second end (C) of the extent of the longer principal axis (AC).

7. Pneumatic vehicle tyre according to the features of one of the preceding claims,
wherein a planar end face (12), which connects the point P to the planar surface (11), is formed in the elevation (4) in the position of the shorter principal axis (BD).

8. Pneumatic vehicle tyre according to the features of one of the preceding claims,
wherein a is formed with 5 mm ≤ a ≤ 15 mm.

9. Pneumatic vehicle tyre according to the features of one of the preceding claims,
wherein b is formed with 0.5 mm ≤ b ≤ 3 mm.

10. Pneumatic vehicle tyre according to the features of one of the preceding claims,
wherein b is formed with b ≤ 0.25 a.

11. Pneumatic vehicle tyre according to the features of one of the preceding claims,
wherein c is formed with (0.6 a) ≤ c ≤ (0.8 a).

12. Pneumatic vehicle tyre according to the features of one of the preceding claims,
wherein h is formed with h ≤ 0.25 H.

13. Pneumatic vehicle tyre according to the features of one of the preceding claims,
wherein H is formed with 1 mm ≤ H ≤ 2 mm.

## Revendications

1. Pneumatique de véhicule comprenant une bande de roulement profilée avec des éléments profilés (2), tels que des éléments de blocs profilés ou des nervures profilées, et avec des rainures (3), les rainures (3) étant limitées dans la direction radiale R vers l'intérieur par un fond de rainure (5) et des deux côtés du fond de rainure (5) à chaque fois par des parois de rainure qui forment à chaque fois des flancs d'éléments profilés (2) limités par la rainure, des rehaussements (4) étant réalisés de manière répartie dans au moins une rainure (3), dans le fond de rainure (5) le long de l'étendue de la rainure (3), dont la surface de base (6) dans le fond de rainure (5) présente à chaque fois deux axes principaux orientés perpendiculairement l'un à l'autre (AC, BD) de longueurs a et b avec a>b, l'axe principal le plus long (AC) étant orienté dans la direction d'étendue de la rainure (3) et formant un axe de symétrie de la surface de base (6) et coupant l'axe principal le plus court (BD) à une distance c avec c≥(a/2) depuis une première extrémité d'étendue (A) de l'axe principal le plus long (AC), le rehaussement (4), le long de son étendue le long de l'axe principal le plus long (AC) dans ses plans de coupe formés transversalement à l'axe principal le plus long (AC) étant à chaque fois réalisé avec un contour en coupe dont la ligne de contour limitant radialement vers l'extérieur le rehaussement (4) est réalisée avec une hauteur croissant constamment des deux côtés de l'axe principal le plus long (AC) à partir du fond de rainure (5) dans la direction de l'axe principal le plus long (AC), la ligne de contour formée dans les plans de coupe étant réalisée, dans une première portion d'étendue formée entre la première extrémité d'étendue (A) et la distance c à la première extrémité d'étendue (A), à chaque fois à partir d'une portion de contour (K₁, K₂) des deux côtés de l'axe principal le plus long (AC), les portions de contour (K₁, K₂) de la ligne de contour étant réalisées à chaque fois avec une hauteur croissant constamment jusqu'à la position de l'axe principal le plus long (AC) et se coupant à cet endroit au niveau d'un point de sommet S de l'allure du contour, les points de sommet S, dans la première portion d'étendue partant de la première extrémité d'étendue (A) de l'axe principal le plus long (AC) le long de l'étendue de l'axe principal le plus long (AC) jusqu'à la distance c, formant une ligne de sommet de hauteur croissant constamment, qui est réalisée au niveau de son point P à la position de l'axe principal le plus long (AC) à la distance c de la première extrémité d'étendue (A) avec une hauteur maximale H1,
**caractérisé en ce que**
dans la portion d'étendue formée entre l'axe principal le plus court (BD) et la deuxième extrémité d'étendue (C) de l'axe principal le plus long (AC), la ligne de contour est à chaque fois réalisée dans les plans de coupe à partir de trois portions de contour (K₃, K₄, K₅), dont les deux portions de contour extérieures (K₃, K₄) sont à chaque fois réalisées dans la direction de l'axe principal le plus long (AC) jusqu'à une hauteur h avec h < H₁ avec une hauteur croissant constamment et la portion de contour centrale (K₅) forme une connexion essentiellement rectiligne des deux portions de contour extérieures (K₃, K₄) réalisée à la hauteur h, les portions de contour centrales (K₅) formant dans la région d'étendue entre la deuxième extrémité d'étendue (C) de l'axe principal le plus long (AC) et l'axe principal le plus court (BD) une surface (11) essentiellement plane qui limitent le rehaussement (4) radialement vers l'extérieur dans cette portion.

2. Pneumatique de véhicule selon les caractéristiques de la revendication 1, dans lequel la surface de base (6) est réalisée en forme de cerf-volant.

3. Pneumatique de véhicule selon les caractéristiques de la revendication 1 ou 2, dans lequel la ligne de sommet s est réalisée sous forme rectiligne.

4. Pneumatique de véhicule selon les caractéristiques de l'une quelconque des revendications précédentes, dans lequel les deux portions de contour (K₁, K₂) formées dans la première portion d'étendue dans les plans de coupe sont à chaque fois réalisées sous forme rectiligne.

5. Pneumatique de véhicule selon les caractéristiques de l'une quelconque des revendications précédentes, dans lequel les deux portions de contour extérieures (K₃, K₄) formées dans la deuxième portion d'étendue dans les plans de coupe sont à chaque fois réalisées sous forme rectiligne.

6. Pneumatique de véhicule selon les caractéristiques de l'une quelconque des revendications précédentes, dans lequel la hauteur h de la surface plane (11) le long de son étendue de la le long de l'axe principal le plus long (AC) à partir de la position de l'axe principal le plus court (BD) jusqu'à la deuxième extrémité d'étendue (C) de l'axe principal le plus long (AC) est réalisée en diminuant de manière monotone.

7. Pneumatique de véhicule selon les caractéristiques de l'une quelconque des revendications précédentes, dans lequel, dans le rehaussement (4) dans la position de l'axe principal le plus court (BD), est réalisée une surface frontale plane (12) qui relie le point P à la surface plane (11).

8. Pneumatique de véhicule selon les caractéristiques de l'une quelconque des revendications précédentes, dans lequel a est réalisée avec 5 mm ≤ a ≤ 15 mm.

9. Pneumatique de véhicule selon les caractéristiques de l'une quelconque des revendications précédentes, dans lequel b est réalisée avec 0,5 mm ≤ b ≤ 3 mm.

10. Pneumatique de véhicule selon les caractéristiques de l'une quelconque des revendications précédentes, dans lequel b est réalisée avec b ≤ 0,25a.

11. Pneumatique de véhicule selon les caractéristiques de l'une quelconque des revendications précédentes, dans lequel c est réalisée avec (0,6a) ≤ c ≤ (0,8a).

12. Pneumatique de véhicule selon les caractéristiques de l'une quelconque des revendications précédentes, dans lequel h est réalisée avec h ≤ 0,25H.

13. Pneumatique de véhicule selon les caractéristiques de l'une quelconque des revendications précédentes, dans lequel H est réalisée avec 1 mm ≤ H ≤ 2 mm.
